# EUROPEAN PATENT SPECIFICATION

(11) **EP 2 908 159 B1**
(45) Date of publication and mention of the grant of the patent: **31.08.2016**
(21) Application number: 14155053.3
(22) Date of filing: 13.02.2014
(51) Int. Cl.: G02B 5/08, G02B 27/10, G02B 27/14, H01S 3/00, G02B 5/28

(54) **Chirped dichroic mirror and a source for broadband light pulses**
Gechirpter dichroitischer Spiegel und Quelle für breitbandige Lichtimpulse
Miroir dichroïque comprimé et source d'impulsions de lumière à large bande

(43) Date of publication of application: 19.08.2015
(73) Proprietor: Deutsches Elektronen-Synchrotron DESY, 22607 Hamburg (DE)
(72) Inventor: Kärtner, Franz, 22559 Hamburg (DE); Chia, Shih-Hsuan, 22607 Hamburg (DE)
(74) Representative: Uexküll & Stolberg

(56) References cited:
- EP-A2- 1 130 703
- WO-A1-01/04998
- WO-A2-02/068999
- US-A1- 2005 220 154
- US-B1- 6 590 925
- NICOLAI MATUSCHEK ET AL: "Theory of Double-Chirped Mirrors", 1 April 1998 (1998-04-01), IEEE JOURNAL OF SELECTED TOPICS IN QUANTUM ELECTRONICS, IEEE SERVICE CENTER, PISCATAWAY, NJ, US, XP011062378, ISSN: 1077-260X * the whole document *

## Description

The invention relates to a chirped dichroic mirror comprising a stack of alternating high refractive index and low refractive index layers, a front end portion including an antireflective (AR) coating followed by an impedance matching region in which the ratio of the optical thickness of a high refractive index layer to the optical thickness of the next following low refractive index layer is adiabatically increasing to a first value, the impedance matching region being followed by a chirped mirror region where the Bragg wavelength of the layer pairs is generally increasing or generally decreasing, and to a source for broadband light pulses using such dichroic mirrors.

The production of intense ultrashort pulses enables us to study ultrafast dynamics and strong-field physics: Few-cycle pulses of light allow increasing the efficiency of extreme nonlinear optical processes such as high harmonic generation(P. B. Corkum, Phys. Rev. Lett. 71, 1994 (1993)). Moreover, using few-cycle optical pulses along with carrier-envelope phase stabilization paves a way for the study of attosecond science (G. Sansone et al., Science 314, 443 (2006); E. Goulielmakis et al., Science 320, 1614 (2008); M. Paul, Science 292, 1689 (2001); P. B. Corkum et al., Nature Phys. 3, 381 (2007)) and precise control of light-matter interactions (E. Goulielmakis et al., Science 317, 769 (2007); A. L. Cavalieri et al., "Attosecond spectroscopy in condensed matter," Nature 449, 1029 (2007); M. Schultze et al., "Delay in photoemission," Science 328, 1658 (2010)). Therefore, the generation and dispersion control of even broader optical bandwidth pulses, in order to tailor shorter bursts of light in the time domain, is desired.

Recent developments in short pulse generation have produced coherent optical spectra with multiple octaves of bandwidth by sub-cycle waveform synthesis (S. W. Huang et al., Nat. Photon. 5, 475 (2011); O. D. Muecke et al., CTh3H in the digest of CLEO, San Jose, CA (2013)) and supercontinuum generation (S. Fang et al., IEEE Photon. Tech. Lett. 23, 688 (2011); M. Wirth et al., Science 334, 195 (2011)). However, the dispersion control over such ultrabroad bandwidths is very challenging. Since the invention of ultrashort pulse lasers, several approaches have been invented for dispersion control, including active techniques based on liquid-crystal modulators (A. M. Weiner et al., Opt. Lett. 15 326-328 (1990); K. Hazu et al., Opt. Lett. 32, 3318 (2007)), acousto-optic modulators (P. Tournois, Optics Comm. 140, 245 (1997)), and mechanically deformable mirrors (E. Zeek et al., Opt. Lett. 24, 493 (2000); A. Baltu 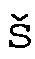 ka et al., Opt. Lett. 27, 306 (2002)), as well as passive techniques using prism pairs(R. L. Fork et al., Opt. Lett. 9, 150 (1984)), grating pairs(E. B. Treacy, Phys. Lett. 28A, 34 (1968)), and chirped mirrors (CMs) (R. Szipöcs et al., Opt. Lett. 19, 201 (1994); F. X. Kärtner et al., Opt. Lett. 22, 831 (1997); F. X. Kärtner et al., J. Opt. Soc. Am. B 18, 882 (2001); V. Pervak et al., Opt. Lett. 32, 1183 (2007); V. Pervak et al., Appl. Phys. B. 87, 5 (2007); G. Steinmeyer, Opt. Express 11, 2385 (2003); N. Matuschek et al., Appl. Phys. B 71, 509 (2000); G. Tempea et al., J. Opt. Soc. Am. B 18, 1747 (2001). Liquid crystal devices (K. Hazu et al., Opt. Lett. 32, 3318 (2007)) with ∼2 octave of bandwidth have been developed. However, they are hampered by its low transmission and limited pulse energy handling and therefore, cannot be directly applied to high intensity sources. Multilayer coatings as CM designs have the superior advantages of being robust and supporting ultrabroad bandwidth with high reflectivity and high damage threshold. Therefore, the ultrabroadband design and fabrication of multilayer coatingsare very important, especially for the control of extremely intense sub-cycle pulses, which requires precise dispersion control while reducing unwanted nonlinear interaction in the optical beam path.

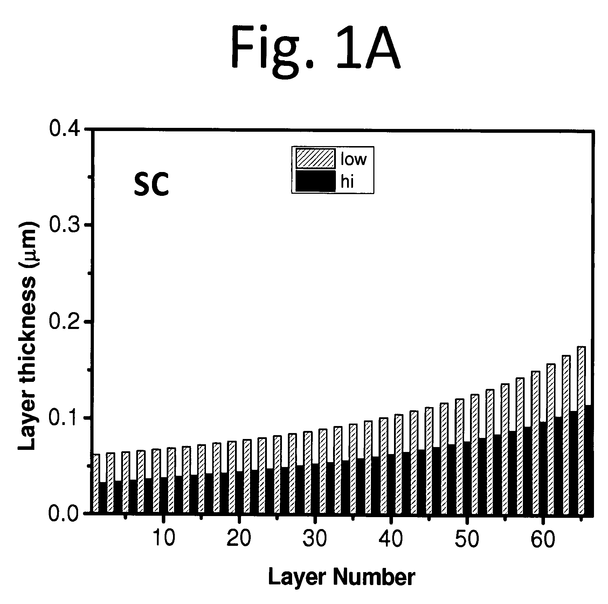

In principle, CMs are designed as dispersive optical interference coatings with low and high index dielectric layer pairs. Symmetrical quarter-wavelength stacks result in strong Bragg reflection for the specific wavelengths. In a simple CM(R. Szipöcs et al., Opt. Lett. 19, 201 (1994)), the Bragg wavelength of the individual layer pair is varied from layer pair to layer pair, so that, usually, longer wavelengths penetrate deeper into the mirror structure than shorter wavelengths before being reflected; such simple chirped structure is shown in Fig. 1A. However, the dispersion properties of these mirrors with unavoidable strong group delay (GD) ripples may not be adequate for broadband dispersion control. The cause of the strong GD ripples is the following: Longer wavelengths have to pass the first section of the CM, which acts as a transmission grating for these wavelengths. The slight reflection in the front section interferes with the strong Bragg reflection from the deeper layers, as in a Gires-Tournois interferometer (GTI). The slight reflection in the front section can be interpreted as the wave impedance mismatch of the mirror structure between the ambient medium (e.g. air) and the deeper layers(F. X. Kärtner et al., Opt. Lett. 22, 831 (1997)): The wave impedance, the property of the wave travelling in the medium, is defined in terms of the ratio of the transverse components of the electric and the magnetic field. It can be directly linked to the coupling between the forward and backward propagating waves.

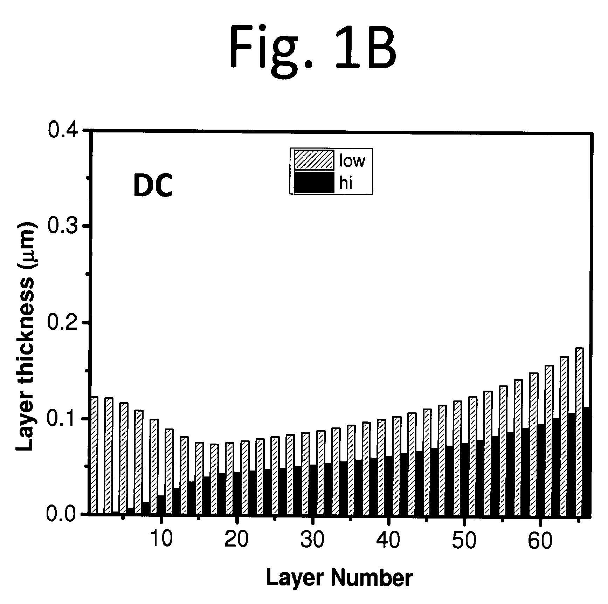

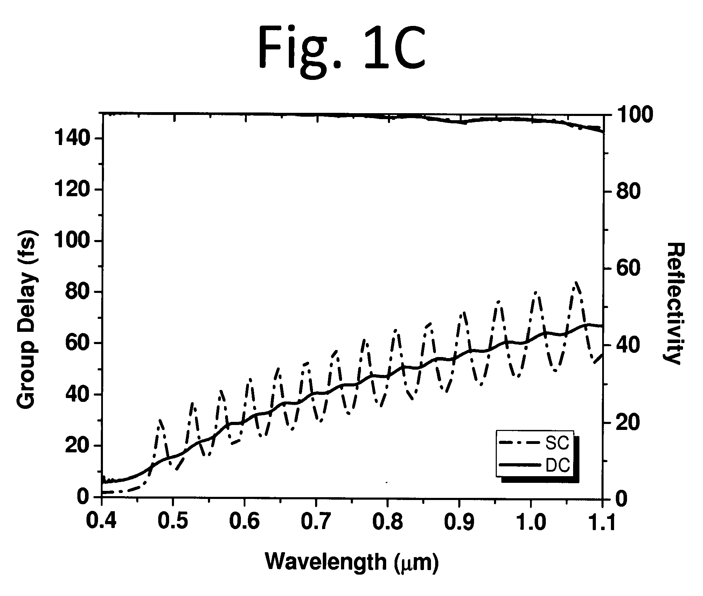

The Double-Chirped Mirror (DCM) was thus introduced (F. X. Kärtner et al., Opt. Lett. 22, 831 (1997)) to tailor the coupling in the front stacks, which is shown to be equivalent to a chirp in the thickness of the high-index layer in addition to the chirp of Bragg wavelength. A typical double chirped structure is shown in Fig. 1B. By matching the grating impedance from the ambient medium, which is assumed here to be the low index medium in the multilayer stack, to the Bragg stack, initially by an AR coating followed by adiabatic impedance matching in the front pairs greatly reduces the undesired reflections and therefore reduces the ripples in the GD. The reflectivities and GDs of the chirped structures shown in Fig. 1A and Fig. 1Bare plotted in Fig. 1C, wherein structures are embedded in the low index medium (substrate) and light is incoming at normal incidence. However, in the prior art, when trying to achieve multilayer coating designs to cover >2 octave of bandwidth, which is necessary for advanced optical source developments, one runs into difficulties with internal resonances in the coating: Such mirror systems with >2 octave bandwidth have not been demonstrated so far, even using a complementary pair design(F. X. Kärtner et al., J. Opt. Soc. Am. B 18, 882 (2001); V. Pervak et al., Opt. Lett. 32, 1183 (2007); V. Pervak et al., Appl. Phys. B. 87, 5 (2007)).

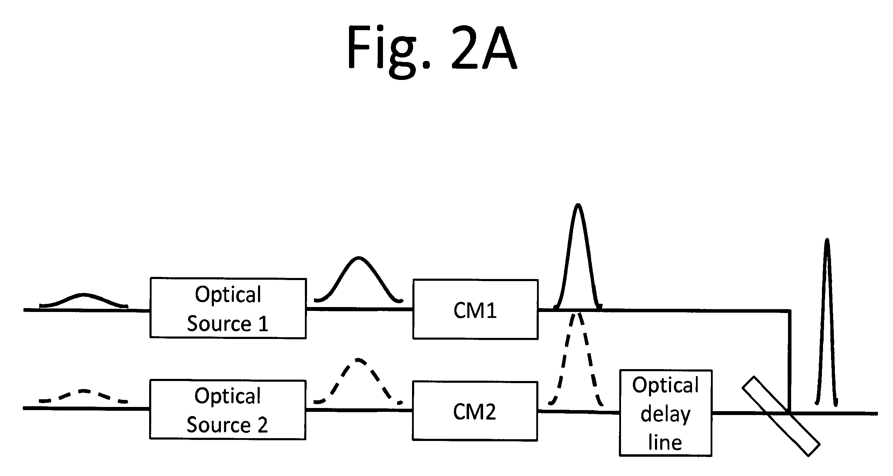

Therefore, in the previous works on optical synthesizers, separate dispersion-control units for different spectral ranges have been proposed(O. D. Muecke et al., CTh3H in the digest of CLEO, San Jose, CA (2013); M. Wirth et al., Science 334, 195 (2011)). In one version, as shown in Fig. 2A, the pulses covering different spectral ranges will be compressed before the pulse combination. However, in that case one cannot further boost the pulse energy since the combined intense ultrashort pulse, which has been compressed with a high peak intensity, induces unwanted nonlinear optical interactions in the beam combiner substrate, which would reduce beam quality.

Thus, in order to reduce the impact of nonlinearities, what is needed is to combine the chirped pulses and then using ultrabroadband DCMs as a compression unit. In addition, to efficiently combine two broadband optical pulses with different spectra, broadband dichroic mirrors (DM) with dispersion control are necessary, which also have not been developed so far.

Therefore, broadband mirror designs to realize the proposed dispersion management are of high priority, which provide impedance matching (i.e. AR coating) with super-octave bandwidth to reduce the oscillations in the GD, allowing dispersion management while controlling the reflectivity over a wide bandwidth.

It is the objective of the present invention to provide such improved dispersion control mirror systems.

This objective is met by applying a device we called a chirped dichroic mirror (CDM) comprising the features of claim 1. Preferred embodiments of the invention are set out in the dependent claims.

According to the present invention a chirped dichroic mirror, comprising a stack of alternating high reflective index and low reflective index layers, has a front end portion including an AR coating followed by an impedance matching region in which the ratio of the optical thickness of a high reflective index layer to the optical thickness of the next following low reflective index layer is adiabatically increasing from a value corresponding to the surrounding medium to a first value corresponding to the following chirped mirror region in the dichroic mirror. In this chirped mirror region the Bragg wavelength of a pair of adjacent high reflective index and low reflective index layers is generally increasing or generally decreasing. According to the present invention the chirped dichroic mirror has a Bragg end region which is formed as a second impedance matching region in which the ratio of the optical thickness of a high reflective index layer to the optical thickness of the next following low reflective index layer starts at the value of the ratio in the adjacent chirped mirror region and is then adiabatically decreasing in order to provide matched impedance to the surrounding medium over the transmission spectral band.

In a preferred embodiment the impedance matching region/layer pairs is characterized in matching the impedance from the preceding medium/structure to the following medium/structure, achieved by varying the ratio of the optical thickness of a high reflective index layer to the optical thickness of the next following low reflective index layer (e.g., to match the impedance from the ambient medium to the chirped mirror region according to claim 1, the ratio is increased to the value in the following chirped mirror region; to match the impedance from the chirped mirror region to the surrounding medium, the ratio is decreased from the value in the preceding chirped mirror region).

In the preferred embodiment the impedance matching region/layer pairs provides high and smooth transmittance, which leads to (1) high reflectivity and smooth GD over the high reflectivity range of a chirped mirror region if preceded by the chirped mirror region and (2) high transmission with side-lobe suppression outside the high reflectivity range if preceded by the surrounding medium (e.g., substrate).

In a preferred embodiment the chirped dichroic mirror can be a double chirped mirror in combination with back impedance-matched layer pairs having a front impedance matching region in which ratio of the optical thickness of a high reflective index layer to the optical thickness of the next following low reflective index layer starts from zero and is then adiabatically increasing to a first value which responds to the value at the beginning of the following chirped mirror region.

According to a further aspect of the present invention a source for broadband light pulses is provided which comprises at least two broadband laser light sources with different wavelength spectra, a combination unit in which light from two different broadband laser light sources is combined to a single beam, wherein the combination unit comprises a chirped dichroic mirror according to the present invention. This chirped dichroic mirror is arranged with respect to the two broadband laser light sources such that the light beam from one broadband laser light source is directed to intersect the light beam of the second broadband laser light source at an angle on the chirped dichroic mirror, wherein the chirped dichroic mirror acts as a beam combiner/splitter and thereby produces two beams of combined light beams from the first and second broadband laser light sources.

In a preferred embodiment each of the broadband laser light sources comprises a laser light source and an optical amplifier through which the light of the laser light source is passed.

In a preferred embodiment the chirped dichroic mirror of the combination unit is arranged to achieve dispersion control mainly by varying, in the chirped mirror region between the front and back impedance matching regions, the sum of the optical thicknesses of a low reflective index layer and its adjacent subsequent high reflective index layer as a function of the layer number to be generally increasing to obtain negative dispersion or to be generally decreasing to obtain positive dispersion.

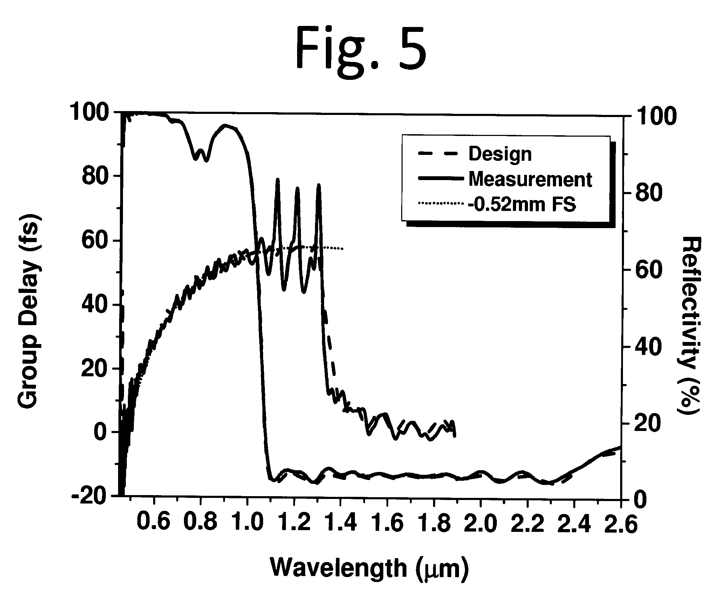

The preferred embodiment of the chirped dichroic mirror provides (1) high reflectivity and smooth GD over the high reflectivity range of the mirror and (2) high transmission with side-lobe suppression outside the high reflectivity range, respectively, as the demonstration plotted in Fig. 5.

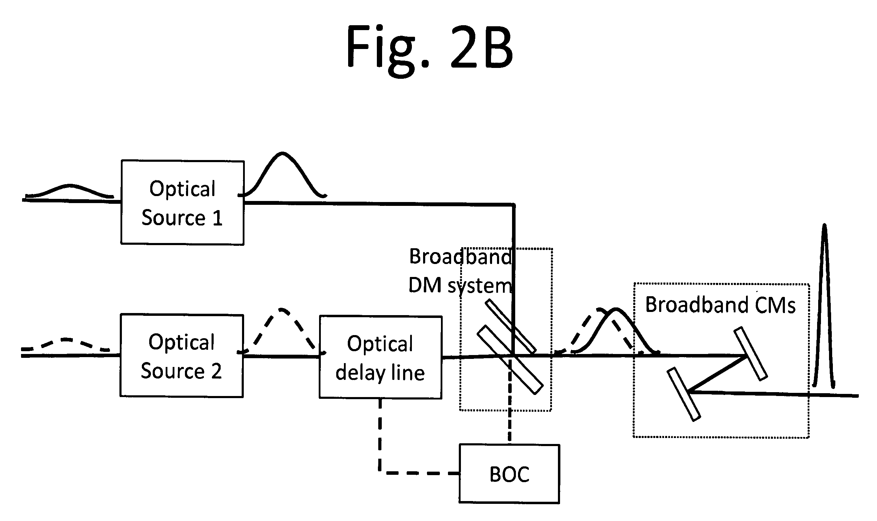

It is a further objective of the present invention to provide an improved optical synthesizer to provide a source for broadband, ultrashort light pulses. As has been mentioned-above, for such optical synthesizers separate dispersion-control units for different spectral ranges have been proposed. In one version of such known optical synthesizer, as shown in Fig. 2A, the pulses from two light sources having different spectral ranges will be compressed before the pulse combination, as illustrated. As mentioned, in this case it is not possible to further boost the pulse energy since the high peak intensity of the combined intense ultrashort pulse induces unwanted nonlinear optical interactions in the beam combiner substrate or in the following materials which reduce beam quality. Thus, in order to reduce the impact of nonlinearities it is contemplated to use the chirped dichroic mirrors in an arrangement in which the chirped pulses are combined and then are compressed in a final stage compressor. Such final stage compressor can be established by a pair of ultrabroadband double chirped mirrors in which the incoming light from the combination unit is compressed by multiple reflections between the double chirped mirror pair. Such an arrangement is shown in Fig. 2B.

In this preferred embodiment the source for broadband light pulses is arranged to generate short pulse length light pulses by passing the light beam from the combination unit as an incoming beam to a compression unit which comprises at least a pair of ultrabroadband double chirped mirrors arranged such that a compressed light pulse is generated by multiple reflections of the incoming beam between the double chirped mirror pairs.

The present invention will be further explained in connection with the drawings in which:
Fig. 1A shows a simple chirped (SC) mirror structure of the prior art comprising layers of low refractive index material (low, e.g. SiO₂) and high refractive index material (hi, e.g. TiO₂);
Fig. 1B shows a double chirped (DC) mirror structure of the prior art comprising layers of low refractive index material (low, e.g., SiO₂) and high refractive index material (hi, e.g., TiO₂);
Fig. 1C shows group delay and reflectivity of a simple chirped (SC) mirror as in Fig. 1A and of a double chirped (DC) mirror as in Fig. 1B, wherein the multilayer mirror structures are embedded in the low index material and light is incoming at normal incidence;
Fig. 2A shows a prior art optical synthesizer including two broadband few-cycle optical sources with separated chirped mirrors (CM) in different wavelength ranges;
Fig. 2B shows a broadband optical synthesizer scheme according to an aspect of the present invention with reduced nonlinear interaction in the optical path utilizing on chirped dichroic mirrors (CDM), ultrabroadband double chirped mirrors (DCM), and a balanced optical cross-correlator (BOC);
Fig. 3 shows a chirped dichroic mirror according to the present invention with dual adiabatic matching (DAM) structures and the corresponding reflectivity and group delay of a simple chirped mirror (SC) as in Fig. 1A, of a double chirped mirror as in Fig. 1B, and of a chirped dichroic mirror with dual adiabatic matching (DAM) as in the upper part of Fig. 3;
Fig. 4 shows a perturbed, numerically optimized structure of the chirped dichroic mirror comprising the features in claim 1 toachieve the reflectivity and group delay goal with an initial analytic DAM structure similar to Fig. 3, as well as anti-reflection coating in the initial few layers to provide impedance matching from air to the low index material;
Fig. 5 shows reflectivity and group delay in reflection of the optimized chirped dichroic mirror of Fig. 4 with a high reflectivity band in the range of 0.45 µm - 1 µm and a high transmission band from 1.1 µm to 2.4 µm, wherein the group delay in reflection from 0.45 µm - 1.3 µm is designed to compensate the dispersion of 0.52mm optical path in fused silica (FS) ;
Fig. 6 shows a schematic diagram of a dispersion-matched system for a combination unit utilizing a chirped dichroic mirror of the present invention;
Fig. 7 shows the transmitted group delay and transmittance of the chirped dichroic mirror;
Fig. 8 shows the group delay of the reflected beam and of the transmitted beam in port 4 in Fig. 6;
Fig. 9 shows in the upper part the structure of the first mirror of the optimized ultrabroadband double-chirped-mirror pair that is utilized as a compression unit in the synthesizer of
Fig. 2B, wherein cascaded or periodically repeating DAM-like structures (indicated by the arrows) can be observed with an anti-reflection coating in the initial few layers to provide impedance matching from air to the low index material, wherein in the lower part the anti-reflection behavior at longer wavelengths is shown;

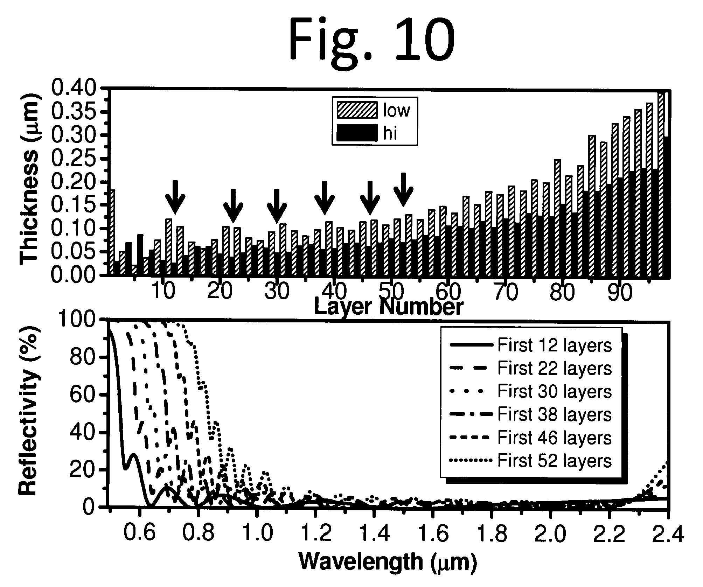

Fig. 10 shows in the upper part the structure of the second mirror of the optimized ultrabroadband double-chirped-mirror pair, wherein cascaded or periodically repeating DAM-like structures (indicated by the arrows) can be observed with an anti-reflection coating in the initial few layers to provide impedance matching from air to the low index material, wherein in the lower part the anti-reflection behavior at longer wavelengths is shown;

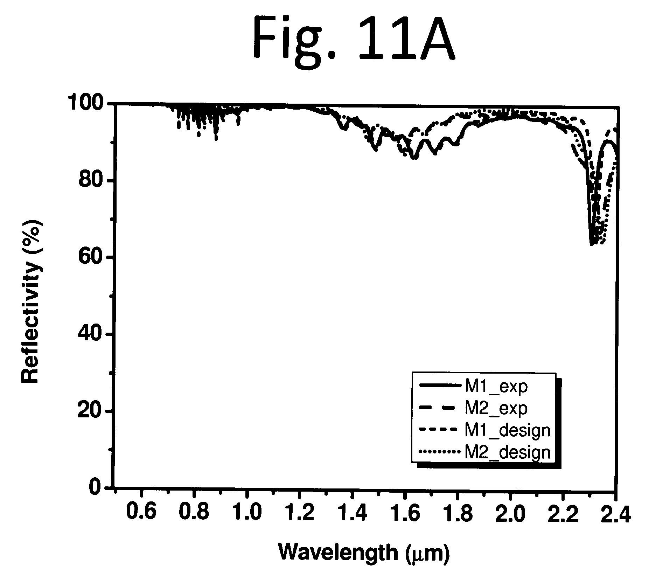

Fig. 11A shows the measured and calculated reflectivity of the optimized ultrabroadband double-chirped mirror pair utilized as a compression unit in the synthesizer of Fig. 2B;

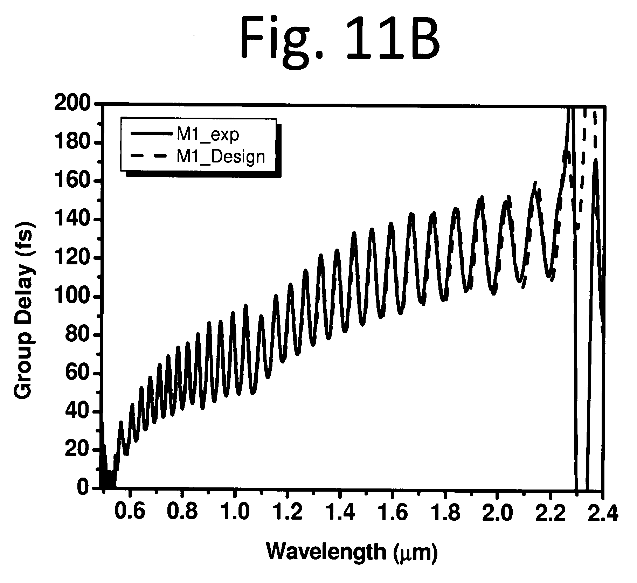

Fig. 11B shows the measured and calculated group delay of the first mirror of the optimized ultrabroadband double-chirped mirror pair;

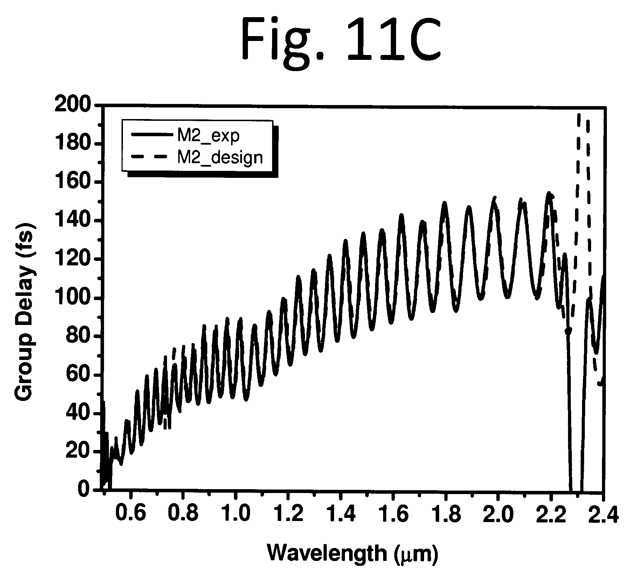

Fig. 11C shows the measured and calculated group delay of the second mirror of the optimized ultrabroadband double-chirped mirror pair;

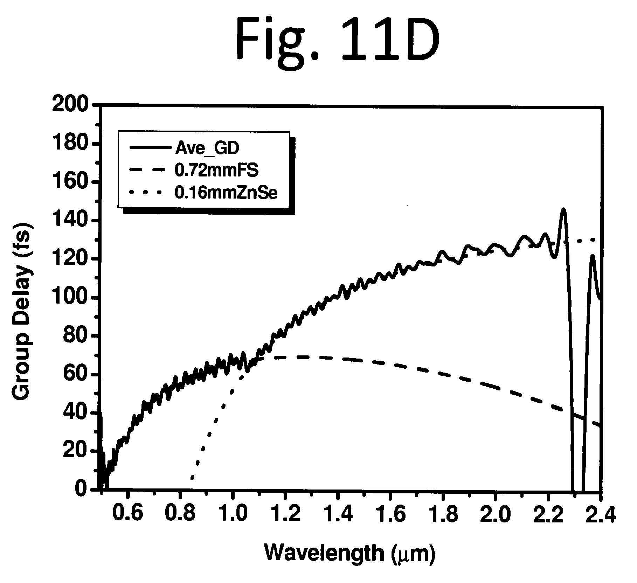

Fig. 11D shows the averaged measured group delay of the optimized ultrabroadband double-chirped mirror pair, which is designed to compensate 0.72 mm fused silica (FS) in the spectral range of 0.49 µm - 1.05 µm, and 0.16 mm ZnSe in the range of 1.05 µm - 2.25 µm;

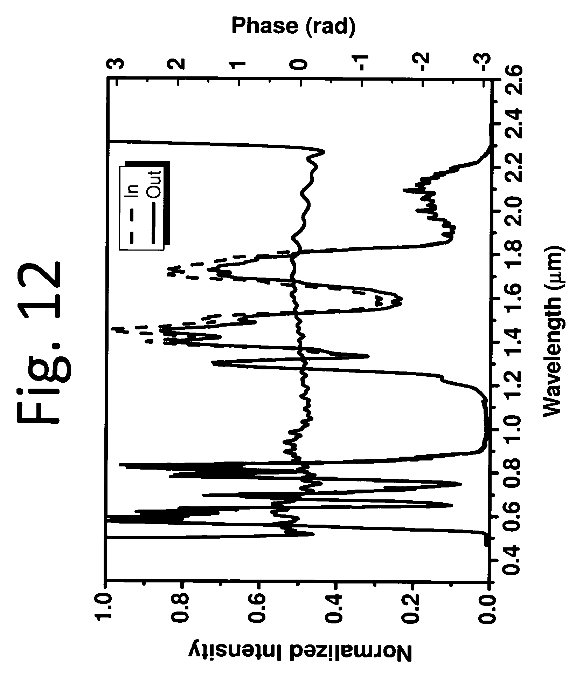

Fig. 12 shows the pulse characteristics in frequency domain after the reflections between one pair of the ultrabroadband double-chirped mirrors, wherein the input test spectrum is shown as the dashed curve, and the solid lines show the reflected spectrum and phase by considering the measured reflectivity and residual phase of the mirror pair, respectively;

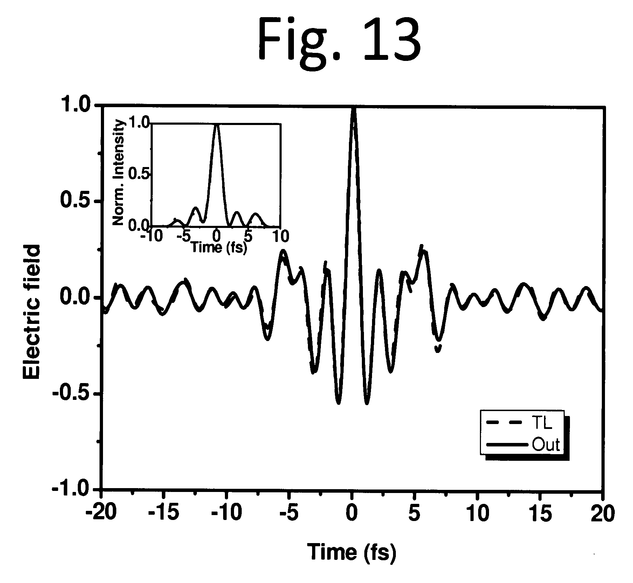

Fig. 13 shows the pulse characteristics in time domain after the reflections between one pair of the DAM double-chirped mirrors, wherein the transform-limited electric field of the input test spectrum of Fig. 12 is shown as a dashed curve, the solid curve showing the electric field of the pulse with the output spectrum and phase in Fig. 12, wherein the normalized input/output pulse duration is also shown in the inset (TL: the transform-limited pulse).

### Description of the invention

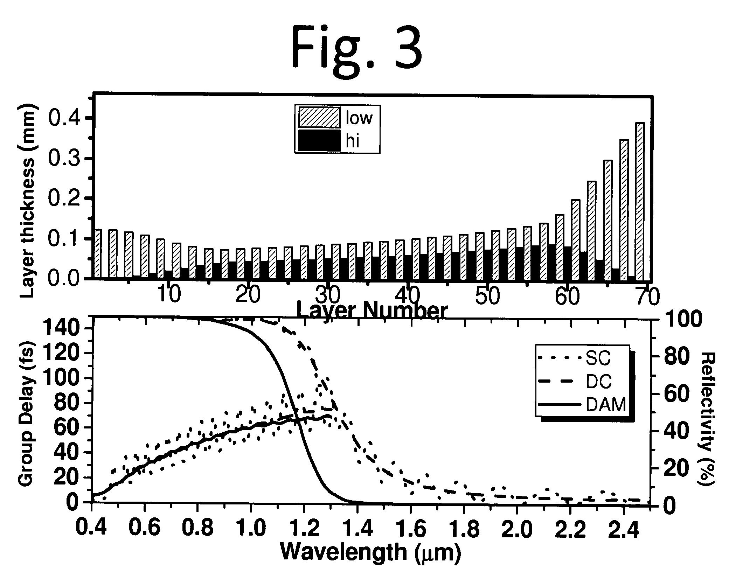

Broadband mirror systems, in order to realize the proposed dispersion management and generate ultrashort pulse width super-octave bandwidth, are described herein. The analytic dual-adiabatic-matching (DAM) structure, which can be further optimized as chirped dichroic mirrors comprising the features of claim 1, provide impedance matching (i.e. AR coating) to reduce the oscillations in the GD, allowing dispersion management while controlling the reflectivity over a wide bandwidth.Various applications based on the embodiments of the apparatus and methods may include some or all of the elements, features and steps described below:
The analytic dual-adiabatic-matching (DAM) structure, which can be further optimized as chirped dichroic mirrors comprising the features of claim 1, is applied to multilayer coating designs. The proposed structure can be used as an initial design of a chirped dichroic mirror and is then modified to optimize the reflectivity and GD towards a certain design goal, which usually complements the GD of some optical elements (e.g. materials or mirrors). In the initial design as shown in Fig. 3, the smooth low reflectivity for long wavelengths along with reduced GD oscillations at short wavelengths (i.e. high reflectivity band) indicate a >2 octave-wide impedance-matching by tailoring the coupling between the forward and backward propagating waves in the back layers to gradually match the impedance of the low index material, as well as preserving the typical DCM characteristics in the front layers. In the DAM structure, in addition to varying the Bragg wavelength in the mirror, not only the thickness of the front high-index layers but also the back one is chirped. The front and back chirped high-index layers perform dual adiabatic impedance matching, providing (1) high reflectivity and smooth GD over the high reflectivity range of the mirror and (2) high transmission with side-lobe suppression outside the high reflectivity range, respectively.

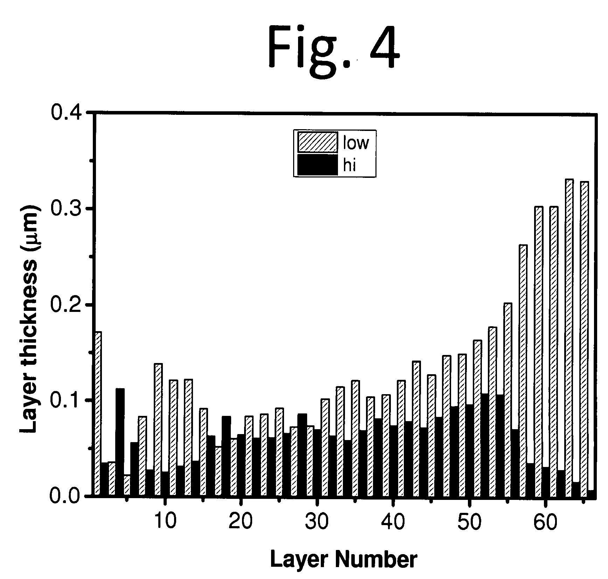

With the DAM structure, the back-chirped high-index layers shrink the high reflection band when compared with a simple CM structure. However, the bandwidth with a smooth GD is still maintained, which provides a smooth GD control even over the edge of the reflection band. Therefore, as shown in Fig. 4 and Fig. 5, the DAM structure can be further applied to design a chirped dichroic mirror, with a broadband GD control over the whole reflection band, employed as a beam combiner/splitter for broadband optical systems/sources, such as optical synthesizer systems, supercontinuum sources, and widely-tunable Raman solitons and dispersive waves (S.-H. Chia, T.-M. Liu, A. A. Ivanov, A. B. Fedotov, A. M. Zheltikov, M.-R. Tsai, M.-C. Chan, C.-H. Yu, and C.-K. Sun, Opt. Express 18, 24085 (2010)). Based on the DAM structure, varies coating designs with both different high-reflectivity ranges and high transmission ranges with high side-lobe suppression can be demonstrated using different high/low index layer pairs or different chirps of the Bragg wavelengths of the layer structures, comprising the features in claim 1.

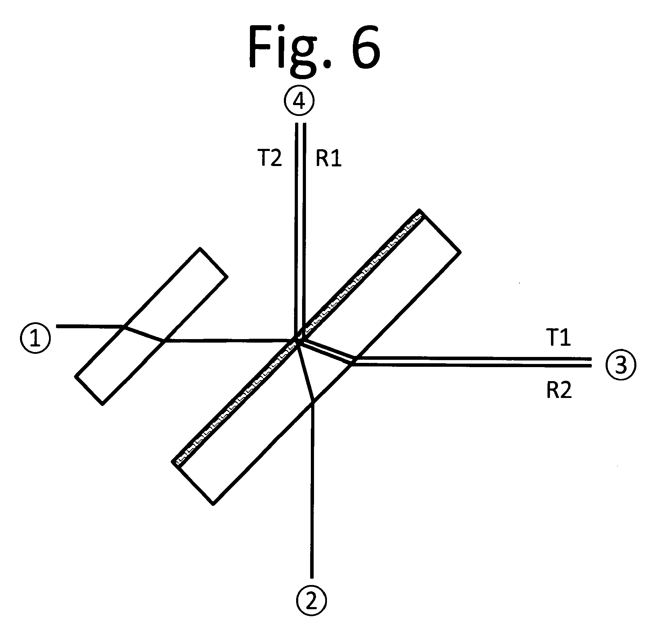

One application of the embodiment is a dispersion-matched scheme, as shown in Fig. 6, to match the dispersion for both reflection and transmission from the input port and output port based on a chirped dichroic mirror. The scheme contains a chirped dichroic mirror with both a lossless coating and slowly-varying transmittance and dielectric plates placed in the input port. The thickness of the plate is matched with the dispersion of the coating and the mirror substrate. The coating of the chirped dichroic mirror is designed such that total dispersion from both a matched plate and the coating equals the dispersion from the mirror substrate.

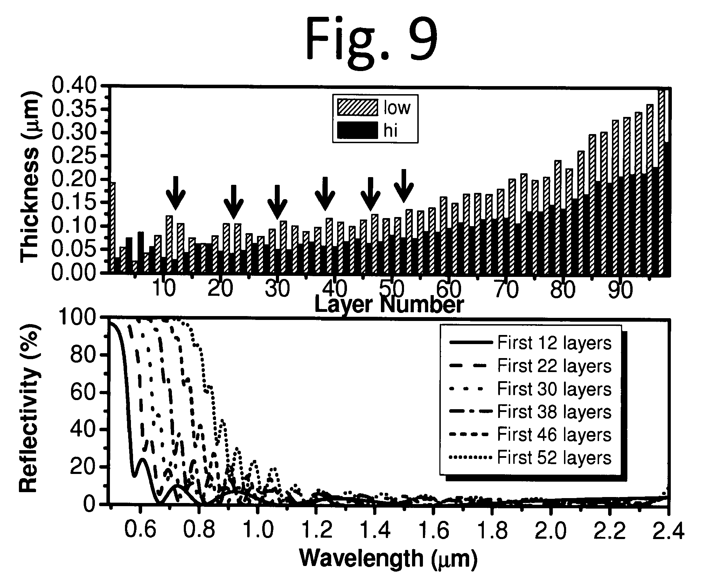

Another application of the embodiment is the cascaded DAM-like structure as a matching section of a DCM, which can be also used as an initial design of the ultrabroadband DCM, the compression unit referred to claim 5, and then perturbed to optimize the reflectivity and GD, as the layer structures shown in Fig. 9 and Fig. 10. The designed GD usually complements with the GD behavior of some optics (e.g. materials or mirrors). Super-octave high-reflectivity mirrors with reduced GD oscillations can be achieved by the cascaded DAM-like structure. Each DAM unit of the cascaded DAM-like structure provides not only a high quality broadband AR coating for longer wavelength which is then reflected by the following chirped Bragg layers with reduced GTI effect, but also high reflectivity and smooth GD behavior over its high reflectivity range. This result in an ultrabroadband DCM is proposed with a wider high reflectivity bandwidth and GD control, when compared to current state-of-the-art chirped mirror designs. The cascaded DAM-like structure also helps to avoid internal resonances in the multilayer structure.

The chirped dichroic mirrors of the present inventions are designed with dispersive interference structures using low and high index dielectric/semiconductor layer pairs that are transparent/partially transparent to electromagnetic radiation in the design frequency range. The dispersive interference structure can be dielectric/semiconductor coatings. For example, the high-index dielectric material can be TiO₂, HfO₂, Nb₂O₅, Ta₂O₅, ZrO, Y₂O₂, AlO₂, or Gd₂O₃, and the low index material can be SiO₂, MgF₂, or Al₂O₃; The high-index semiconductor material can be GaAs and the low semiconductor material can be AlAs.

### Numerical and Experimental demonstration of the invention

### 1. A chirped dichroic mirror with >2 octave bandwidth:

To numerically and experimentally demonstrate the performances of the chirped dichroic mirror with the features described in claim 1, we first create an analytic DAM structure with chirped Bragg wavelength from 0.45 µm to 1.2 µm. The wavelength-dependent refractive indices are included in the analytic design. By preserving the DCM structure in the front layers, the GD oscillations within the designed Bragg wavelength are reduced; the down chirp of the thickness of the back high index layers provides a high transmission coating above 1.2 µm, indicating the impedance matching for the longer wavelengths. Because of the high reflectivity contrast between the Bragg wavelengths and the longer wavelengths, the DAM structure is intriguing to be used as a multi-octave-spanning dispersion-managed chirped dichroic mirror. To realize the idea experimentally, the analytical DAM structure is employed as an initial design, which provides a reflection window for the range of 0.45µm-1µm and transmission in the range of 1.1 µm - 2.5 µm. The numerically optimized result using a fast algorithm (J. R. Birge and F. X. Kärtner, Appl. Opt. 46, 2656 (2007)) is shown in Fig. 4. With an AR coating in the initial few layers to provide impedance matching from air to the low-index coating material, the following structure can strongly preserve the DAM structure as in Fig. 3. The GD in reflection is designed to compensate the dispersion of a 0.52 mm thick fused silica plate in the spectral range of 0.45 µm - 1.3 µm, which is even broader than the high reflectivity window of 0.45 µm - 1.1 µm, as shown in Fig. 5. This feature benefits the implementation of a chirped dichroic mirror as a beam splitter/combiner in a broadband synthesizer without a spectral gap at the edge of the high reflection band. Such a device allows for efficient splitting or combining of different spectral components for scaling of pulse energy and peak intensity, in contrast to what is possible using thin-film neutral beam splitters such as Pellicle mirrors, dispersion-matched dielectric mirrors(J. Kim et al., Opt. Lett. 30, 1569 (2005)), and metallic beam splitters: Using typical dichroic mirrors, the group delay variations at the transition band from high to low reflectivity would be large and the resulting combined pulse would not be compressible. The large GD oscillation in the range of 1.2 µm - 1.3 µm of the experimental curve in Fig. 5 could result from the fabrication error of the thin layers in the back of the designed DAM mirror. However, these large GD oscillations are in the high transmission band and will not affect the split/combined beam. In our design, the imperfect transmittance around 0.8 µm and the 5% reflection above 1.1µm are intentionally created to supply a balanced optical cross-correlator (BOC) (T. R. Schibli et al., Opt. Lett. 28, 947 (2003)) for synthesizing a stable pulse from the two combined beams.

### 2. A dispersion-matched scheme based on a chirped dichroic mirror:

The chirped dichroic mirror can thus be used as a beam combiner/splitter to combine/split pulses with a spectral overlap. In this case, in order to have a better control of the dispersion of the combined/split beam, the dispersion for the two combined/split beam path in the overlapping range should be the same after the chirped dichroic mirror, which is similar to a previous scheme based on a dispersion-matched neutral beam splitter (J. Kim et al., Opt. Lett. 30, 1569 (2005)). A proposed scheme with a DAM mirror and a dielectric plate in port 1 is shown as Fig. 6. Let us denote the group delay dispersion (GDD) of the coating between the air and the substrate interfaces with reflection R1, transmission T1, reflection R2, and transmission T2 by GDD_{R1}, GDD_{T1}, GDD_{R2}, and GDD_{T2}, respectively. In addition, the GDD for a single pass in the substrate of the chirped dichroic mirror and the dielectric plate are denoted as GDDₛ and GDDₚ, respectively. In the design we will match the GDD of the substrate with the GDD of the plate and GDD_{R1} (i.e. GDDₛ=GDD_{R1}+GDDₚ). The GDD for each optical path is then given by: GDD(1→4)= GDDₚ+GDD_{R1}=GDDₛ, GDD (2→4) = GDDₛ+ GDD_{T2}, GDD(1→3)= GDDₚ+GDD_{T1}+GDDₛ, GDD(2→3)= 2GDDₛ+GDD_{R2}.

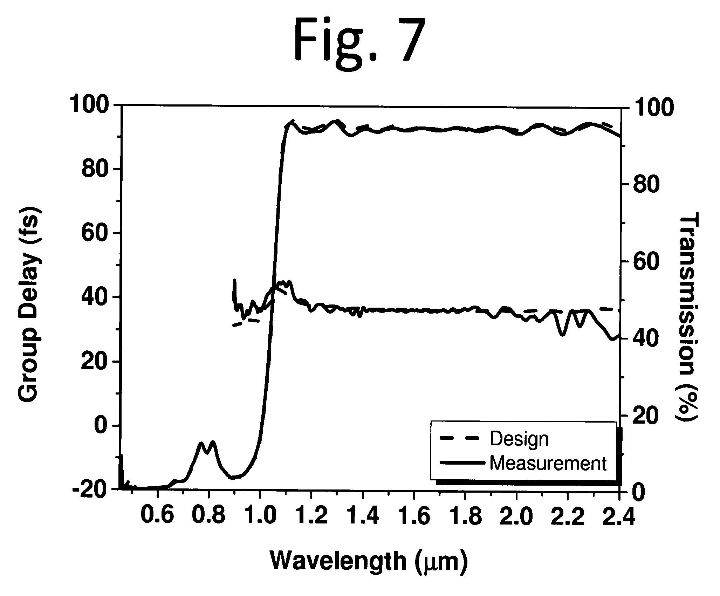

For a lossless coating of the chirped dichroic mirror, the following relationships are generally valid: GDD_{T1}=GDD_{T2} and GDD_{R1}+GDD_{R2}=GDD_{T1}+GDD_{T2}. If the transmittance of the chirped dichroic mirror is slowly-varying in the transition region, the corresponding GD, which is subject to the Kramers-Krönig relation, is also slowly-varying. Therefore, assuming the transmittance of the chirped dichroic mirror in the transition region is smooth enough, the corresponding GDD is negligible: GDD_{T1}≈0. With the designed chirped dichroic mirror, the variation of the transmission GD in the transition range between high transmission band and high reflection band, 1.0 µm -1.1 µm, is <10 fs, as shown in Fig. 7. The Kramers-Krönig relation suggests even lower GD variation is possible based on a mirror with a smoother transmittance curve and a wider transition region.

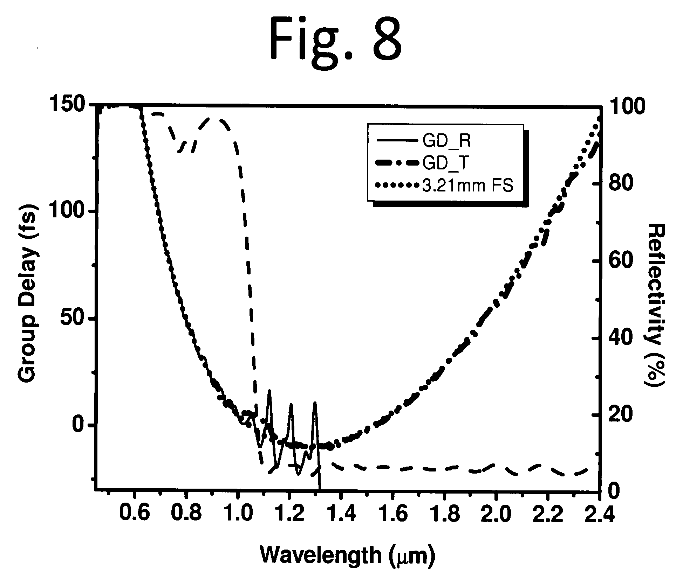

With these additional conditions for a lossless and slowly-varying transmission coating in the transition region, the GDD for each beam path to port 4 becomes identical: GDD(1→4)= GDD_{P}+GDD_{R1}=GDDₛ, GDD (2→4)= GDD_{S}+GDD_{T2}=GDDₛ; The GDD for each beam path to port 3 is also identical: GDD(1→3)= GDD_{P}+GDD_{T1}+GDD_{S}=GDD_{P}+GDD_{S}, GDD(2→3)= 2GDDₛ+GDD_{R2}=GDD_{P}+GDD_{S}. Furthermore, if we additionally place an identical plate in port 4 or have a coating design that GDD_{R1}=GD_{S}, the GDD of all input and output ports is matched. In our case, the transmission band and the transmission GD are shown in Fig. 7; GDD_{R1} and GDD_{S} are equivalent to the GDD of -0.52mm and 3.21mm optical path of fuse silica. Therefore, the matched optical path of the fused silica plate is 3.73mm, and the corresponding dispersion in port 4 is shown in Fig. 8, which has <10 fs of GD variation in the overlapping spectral range. In the optical synthesizer as the scheme proposed in Fig. 2B, the combined light in port 3 will supply a BOC for pulse synthesis. The identical GDD would potentially benefit high signal contrasts in the BOC detection and improve the ability of optical synthesis.

### 3. The ultrabroadband DCM pair:

We further design an ultrabroadbnad DCM pair as a final compression unit. From the above analysis, the DAM structure slightly compromises the reflectivity but provides the broader impedance matching bandwidth. Therefore, cascading the DAM structure in the front layers makes it possible to achieve super-octave bandwidth DCMs, as shown in Fig. 9 and Fig. 10. Based on the demonstrated DAM structure, the ultrabroadband DCM pair is designed and optimized for compensating 1.46 mm thick fused silica plates in the spectral range from 0.49 µm - 1.05 µm, the high reflectivity range of the chirped dichroic mirror, and 0.32 mm of ZnSe in the range of 1.05 µm - 2.3 µm, the transmission range of the chirped dichroic mirror. In order to demonstrate the broadband impedance matching of the cascaded-DAM-like structures, Fig. 9 and 10 show the reflectivity of the structures from the ambient medium, air, to the specific layers in the upper figures of Fig. 9 and 10, respectively. As the number of front layers increasing, starting from the air, the high reflectivity band expands to longer wavelengths, which are determined by the Bragg wavelength of the layer pairs. The arrows in Fig. 9 and Fig. 10 point to the end layer of each DAM-like structure, providing broadband AR coating (impedance matching) with <5% reflection to the designed wavelength of 2.3 µm. The designed/measured reflectivity and GD of the pair are shown in Fig. 11. The average reflectivity of the ultrabroadband DCM pair is >90% and the calculated peak-to-peak values of the averaged residual GD ripples are controlled <5 fs with >2 octave bandwidth. In Fig. 11, the dispersion and reflectivity measurements using a home-built white light interferometer and a photospectrometer, respectively, show excellent agreement with the designed curves.

To further demonstrate the performance of the designed mirrors, we test the pulse distortions at the example of measured optical parametric amplification (OPA) spectra that constitute the basis for a wideband optical synthesizer. As shown in Fig. 12, the black spectrum below 1µm would be reflected by the chirped dichroic mirror, and the spectrum above 1.1µm would be transmitted as the configuration in Fig. 6. The combined pulse, with 1.88 fs full width at half maximum (FWHM) transform-limited pulse duration, is chirped to decrease the peak intensity when passing the combiner substrate or a window, and the dispersion of the combined pulse can be compensated by the ultrabroadband DCM pair. The pulse distortions were examined by considering the measured reflectivities and residual GD errors of the mirrors. The dashed curves in Fig. 12 and Fig. 13 show the pulse characteristics after the reflections between a pair of ultrabroadband DCMs. The residual phase error of the DCM pair is ∼0.5 rad over the whole bandwidth. The compressed pulses as short as 1.93 fs are generated with only slight differences in the wings of the electric field of the pulse, when compared to the Fourier-transform-limited pulse obtainable from the input spectrum assuming flat phase.

### 4. Summary of the demonstration:

A chirped dichroic mirror which is optimized byan initial analytic design with a DAM structure is proposed to enable dispersion control over >2 octave of bandwidth. The DAM structure tailors the coupling between forward and backward waves by adiabatically matching the impedance in the front and back layers, which provides not only high reflectivity at its Bragg wavelength, but also a broadband high transmittance at the longer wavelengths. Based on the DAM structure, a chirped dichroic mirror according to claim 1 is devised with a broadband dispersion control. In order to coherently combine/split broadband pulses, a dispersion-matched scheme is also proposed as an application of the chirped dichroic mirror to match the dispersion for both reflection and transmission from any input ports and output ports. Since a broadband AR coating in the front layers of a CM is necessary to reduce the GD ripples induced by GTI effects, a cascaded DAM-like structure as the front layers of the ultrabroadband DCM pair is demonstrated to result in the broadest-ever bandwidth coverage. The designed chirped dichroic mirror optionally along with the dispersion-matched scheme as a combination unit and the ultrabroadband DCM pair as a compression unit are then used in a double-octave parametric synthesizer producing 1.9fs (FWHM) pulses. No distinct difference in the electric field is observed with the demonstrated mirrors. These results indicate that the proposed dispersion-controlled mirror system will benefit the development of intense ultrabroadband parametric synthesizers and the dispersion control of multi-octave bandwidth coherent optical sources, as well as other broadband optical systems with supercontinuum sources, or widely-tunable Raman solitons and dispersive waves.

## Claims

1. Chirped dichroic mirror comprising a stack of alternating high refractive index and low refractive index layers, a front end portion including an antireflective coating followed by an impedance matching region in which the ratio of the optical thickness of a high refractive index layer to the optical thickness of the next following low refractive index layer is adiabatically increasing to a first value, the impedance matching region being followed by a chirped mirror region where the Bragg wavelength of the layer pair is generally increasing or generally decreasing, **characterized in that** the layers in a back end region form a second impedance matching region in which the ratio of the optical thickness of a high refractive index layer to the optical thickness of the next following low refractive index layer starts at the value of this ratio in the adjacent chirped mirror region and is then adiabatically decreasing in order to provide matched impedance to the surrounding medium over the transmission spectral band.

2. A source for broadband light pulses comprising at least two broadband laser light sources with different wavelength spectra, a combination unit in which light from the different broadband laser light sources is combined to a single beam, the combination unit comprising a chirped dichroic mirror structure according to claim 1 which is arranged with respect to the two broadband laser light sources such that the light beam from one broadband laser light source is directed to intersect the light beam of the second broadband laser light source at an angle on the chirped dichroic mirror according to claim 1, which chirped dichroic mirror structure acts as a beam combiner/splitter and thereby produces two beams of combined light beams from the first and second broadband laser light sources.

3. The source for broadband light pulses according to claim 2, **characterized in that** each of the broadband laser light sources comprises a laser light source and an optical amplifier through which the light of the laser light source passes.

4. The source for broadband light pulses according to claim 2 or 3, **characterized in that**, the chirped dichroic mirror structure of the combination unit is arranged to achieve dispersion control by varying, in the region between the front and back impedance matching regions, the sum of the optical thicknesses of a low refractive index layer and its adjacent subsequent high refractive index layer as a function of the layer number to be monotonically increasing to obtain negative dispersion or to be monotonically decreasing to obtain positive dispersion.

5. The source for broadband light pulses according to any of claims 2 to 4, **characterized in that** it is arranged to generate short pulse length light pulses by passing the light beam from the combination unit as an incoming beam to a compression unit which comprises at least a pair of double chirped mirrors arranged such that a compressed light pulse is generated by multiple reflections of the incoming beam between the double chirped mirror pair.

## Patentansprüche

1. Gechirpter dichroitischer Spiegel mit einem Stapel von Lagen mit abwechselnd hohem und niedrigem Brechungsindex, einem vorderen Endbereich mit einer antireflektierenden Beschichtung gefolgt von einer Impedanzanpassungsregion, in der das Verhältnis der optischen Dicke einer Lage mit hohem Brechungsindex zu der optischen Dicke der als nächstes folgenden Lage mit niedrigen Brechungsindex adiabatisch auf einen ersten Wert ansteigt, wobei auf die Impedanzanpassungsregion eine gechirpte Spiegelregion folgt, in der die Bragg-Wellenlänge des Lagenpaars allgemein ansteigt oder allgemein absinkt, **dadurch gekennzeichnet, dass** die Lagen in einer hinteren Endregion eine zweite Impedanzanpassungsregion bilden, in der das Verhältnis der optischen Dicke einer Lage mit hohem Brechungsindex zu der optischen Dicke der als nächstes folgenden Lage mit niedrigem Brechungsindex von dem Wert dieses Verhältnisses in der benachbarten gechirpten Spiegelregion ausgeht und dann adiabatisch abnimmt, um über das Transmissionsspektralband eine angepasste Impedanz zu dem umgebenden Medium zu schaffen.

2. Quelle für Breitband-Lichtimpulse mit wenigstens zwei Breitband-Laserlichtquellen mit unterschiedlichen Wellenlängenspektren, einer Kombiniereinheit, in der Licht von den verschiedenen Breitband-Laserlichtquellen zu einem einzelnen Strahl kombiniert wird, wobei die Kombiniereinheit eine gechirpte dichroitische Spiegelstruktur nach Anspruch 1 aufweist, die in Bezug auf die beiden Breitband-Laserlichtquellen so angeordnet ist, dass der Lichtstrahl von einer Breitband-Laserlichtquelle in eine Richtung gelenkt wird, so dass er den Lichtstrahl der zweiten Breitband-Laserlichtquelle unter einem Winkel an dem gechirpten dichroitischen Spiegel gemäß Anspruch 1 schneidet, wobei die gechirpte dichroitische Spiegelstruktur als Strahlkombinierer/Strahlteiler wirkt und dadurch zwei Strahlen kombinierter Lichtstrahlen aus den ersten und zweiten Breitband-Laserlichtquellen erzeugt.

3. Quelle für Breitband-Lichtimpulse nach Anspruch 2, **dadurch gekennzeichnet, dass** jede der Breitband-Laserlichtquellen eine Laserlichtquelle und einen optischen Verstärker aufweist, den das Licht der Laserlichtquelle passiert.

4. Quelle für Breitband-Lichtimpulse nach Anspruch 2 oder 3, **dadurch gekennzeichnet, dass** die gechirpte dichroitische Spiegelstruktur der Kombiniereinheit dazu ausgelegt ist, eine Dispersionssteuerung zu erreichen, indem in der Region zwischen der vorderen und der hinteren Impedanzanpassungsregion die Summe der optischen Dicken einer Lage mit niedrigem Brechungsindex und ihrer benachbarten folgenden Lage mit hohem Brechungsindex als Funktion der Lagennummer variiert, so dass sie monoton ansteigt, um eine negative Dispersion zu erhalten, oder dass sie monoton abnimmt, um eine positive Dispersion zu erhalten.

5. Quelle für Breitband-Lichtimpulse nach einem der Ansprüche 2 bis 4, **dadurch gekennzeichnet, dass** sie dazu ausgelegt ist, Lichtimpulse mit kurzer Impulslänge zu erzeugen, indem der Lichtstrahl von der Kombiniereinheit als einfallender Lichtstrahl zu einer Kompressionseinheit geführt wird, die wenigstens ein Paar von doppelt gechirpten Spiegeln aufweist, die so angeordnet sind, dass durch Vielfachreflexionen des einfallenden Strahls zwischen dem doppelt gechirpten Spiegelpaar ein komprimierter Lichtimpuls erzeugt wird.

## Revendications

1. Miroir dichroïque comprimé comprenant un empilement de couches à indice de réfraction élevé et à indice de réfraction bas, une partie d'extrémité avant comportant un revêtement antireflet suivi d'une région d'adaptation d'impédance, où le rapport de l'épaisseur optique d'une couche à indice de réfraction élevé sur l'épaisseur optique de la couche à faible indice de réfraction suivante augmente de manière adiabatique à une première valeur, la région d'adaptation d'impédance étant suivie par une région de miroir comprimé où la longueur d'onde de Bragg de la paire de couches est généralement croissante ou généralement décroissante, **caractérisé en ce que** les couches dans une région d'extrémité arrière forment une seconde région d'adaptation d'impédance, où le rapport de l'épaisseur optique d'une couche à indice de réfraction élevé sur l'épaisseur optique de la couche à faible indice de réfraction qui suit immédiatement commence à la valeur de ce rapport dans la région de miroir comprimé adjacente puis est ensuite décroissant de manière adiabatique afin d'assurer une adaptation d'impédance avec le milieu environnant sur la bande de transmission spectrale.

2. Source d'impulsions lumineuses à large bande comprenant au moins deux sources de lumière laser à large bande avec des spectres de longueurs d'ondes différents, une unité de combinaison dans laquelle de la lumière provenant des différentes sources de lumière laser à large bande est combinée à un faisceau unique, l'unité de combinaison comprenant une structure de miroir dichroïque comprimé selon la selon la revendication 1 qui est disposée par rapport aux deux sources de lumière laser à large bande de sorte que le faisceau de lumière provenant d'une source de lumière laser à large bande soit dirigé pour couper le faisceau de lumière de la seconde source de lumière laser à large bande suivant un angle sur le miroir dichroïque comprimé selon la revendication 1, laquelle structure de miroir dichroïque comprimé agit comme un combinateur/séparateur de faisceau et produit ainsi deux faisceaux de rayons lumineux combinés à partir des première et seconde sources de lumière laser à large bande.

3. Source pour impulsions lumineuses à large bande selon la revendication 2, **caractérisée en ce que** chacune des sources de lumière laser à large bande comprend une source de lumière laser et un amplificateur optique à travers lequel la lumière de la source de lumière laser passe.

4. Source d'impulsions lumineuses à large bande selon la revendication 2 ou la revendication 3, **caractérisée en ce que** la structure de miroir dichroïque comprimé de l'unité de combinaison est agencée pour réaliser un contrôle de dispersion en faisant varier, entre les régions d'adaptation d'impédance avant et arrière, la somme des épaisseurs optiques d'une couche à faible indice de réfraction et de sa couche adjacente suivante à indice de réfraction élevé en fonction du nombre de couches croissant de manière monotone pour obtenir une dispersion négative ou décroissant de manière monotone pour obtenir une dispersion positive.

5. Source d'impulsions lumineuses à large bande selon l'une quelconque des revendications 2 à 4, **caractérisée en ce qu'**elle est agencée pour générer de des impulsions lumineuses de courte longueur d'impulsion en faisant passer le faisceau de lumière provenant de l'unité de combinaison sous la forme d'un faisceau entrant vers une unité de compression qui comprend au moins une paire de doubles miroirs comprimés agencés de telle sorte qu'une impulsion lumineuse comprimée soit générée par des réflexions multiples du faisceau entrant entre la paire de doubles de miroirs comprimés.
